# EUROPÄISCHE PATENTANMELDUNG

(11) **EP 4 478 588 A1**
(43) Veröffentlichungstag der Anmeldung: **18.12.2024**
(21) Anmeldenummer: 24172109.1
(22) Anmeldetag: 24.04.2024
(51) Int. Cl.: H02K 5/20, H02K 9/06, H02K 5/10, H02K 9/16, H02K 5/06, H02K 21/14

(54) **EIGENBELÜFTETE ELEKTRISCHE MASCHINE**

(30) Priorität: 24.05.2023 DE 102023204843
(71) Anmelder: Siemens Mobility GmbH, 81739 München (DE)
(72) Erfinder: Bär, Daniel, 91325 Adelsdorf (DE); Körner, Olaf, 90469 Nürnberg (DE); Wetzel, Wolfgang, 91074 Herzogenaurach (DE)
(74) Vertreter: Siemens Patent Attorneys

(57) **Zusammenfassung**

Die Erfindung betrifft eine elektrische Maschine (1), insbesondere eine permanentmagneterregte Synchronmaschine, und ein Fahrzeug mit einer solchen Maschine (1) als Antriebsmotor. Sie umfasst eine in einem Gehäuse (2) angeordnete und gegenüber einer Umgebung (U) der Maschine (1) gekapselte Aktivanordnung (3), welche einen Stator (4) und einen um eine Rotorachse (R) relativ zum Stator (4) drehbaren Rotor (5) aufweist, und einen im Gehäuse (2) von wenigstens einer Lufteintrittsöffnung (8) des Gehäuses (2) bis zu wenigstens einer Luftaustrittsöffnung (9) des Gehäuses (2) verlaufenden Kühlweg (K) zur Führung von Kühlluft. Erfindungsgemäß umfasst die Maschine (1) einen den Rotor (5) tragenden Rotorträger (10), der dreh-fest auf einer im Gehäuse (2) drehbar gelagerten und um die Rotorachse (R) rotierbaren Rotorwelle (11) sitzt, wobei der Kühlweg (K) einen im Rotorträger (10) verlaufenden, bezüglich der Rotorachse (R) rotationssymmetrischen, ringspaltförmigen Kühlkanal (14) mit einem im Bereich des Rotors (5) zylinderförmigen Kanalabschnitt (14Z) und einem anschließenden, trichterförmig nach außen laufenden Kanalabschnitt (14T) aufweist. Hierdurch wird eine elektrische Maschine (1) mit kompakter Bauform bei effektiver Kühlung bereitgestellt.

## Beschreibung

Die Erfindung betrifft eine elektrische Maschine nach dem Oberbegriff des Patentanspruches 1 sowie ein Fahrzeug mit einer solchen Maschine nach Anspruch 12.

Eine derartige elektrische Maschine ist beispielsweise aus der am 31.01.2023 eingereichten europäischen Patentanmeldung 23153859.6 bekannt, die eine Aktivanordnung mit einem Stator und einem um eine Rotorachse rotierbaren Rotor aufweist. Die Aktivanordnung ist durch ein Gehäuse gegenüber der Umgebung gekapselt. Ein Rotorblechpaket umfasst Permanentmagnete zur Magnetisierung des Rotors, das direkt auf eine um die Rotorachse drehbare Welle aufgeschrumpft ist. Innerhalb des Gehäuses verläuft zur Kühlung der Aktivanordnung ein Innenkühlkreislauf mit den Rotor und den Stator axial durchsetzenden Kühlkanälen. Ein erster Lüfter innerhalb des kapselnden Gehäuses bläst Kühlluft von einer Seite der Aktivanordnung durch die Kühlkanäle des Stators auf die andere Seite und saugt diese durch die Kühlkanäle des Rotors wieder zurück. Zusätzlich erzeugt ein zweiter Lüfter auf der anderen Seite eine radial nach außen gerichtete, also der primären Kühlluftströmung entgegengerichtete Sekundärströmung, um durch Verwirbelungen auf der anderen Seite die Kühlwirkung auf einen dort angeordneten Schaltring für die Erregerspule des Stators zu erhöhen. Um die im Innenkühlkreislauf sich erwärmende Kühlluft zu kühlen, ist außerhalb des kapselnden Gehäuses ein Außenkühlkreislauf mit einem Außenkühlkanal vorgesehen. Ein dritter Lüfter außerhalb des Gehäuses saugt von au-ßen Kühlluft an und versorgt den Außenkühlkanal mit Kühlluft.

Aufgrund der komplexen Konstruktion mit gekapseltem Innenkühlkreislauf und einem dessen Kühlluft kühlenden Außenkühlkreislauf sowie der mehreren erforderlichen Lüfter, nimmt die bekannte elektrische Maschine auch einen erheblichen Bauraum ein.

Der Erfindung liegt daher die Aufgabe zugrunde, eine elektrische Maschine der eingangs genannte Art bereitzustellen, die eine kompakte Bauform bei effektiver Kühlung ermöglicht.

Die Aufgabe wird nach der Erfindung gelöst durch eine gattungsgemäße elektrische Maschine mit den im kennzeichnenden Teil des Patentanspruches 1 angegebenen Merkmalen.

Die Erfindung geht aus von einer elektrischen Maschine, insbesondere einer permanentmagneterregten Synchronmaschine, welche eine in einem Gehäuse angeordnete und gegenüber einer Umgebung der Maschine gekapselte Aktivanordnung umfasst. Die Aktivanordnung weist einen Stator und einen um eine Rotorachse relativ zum Stator drehbaren Rotor auf. Die Kapselung schützt die an sich bekannte Aktivanordnung vor durch Kühlluft aus der Umgebung eingetragener Verschmutzung und Feuchtigkeit. Der Stator kann beispielsweise als Statorblechpaket mit eingelegter Zahnspulenwicklung, deren kurze Wickelköpfe mittels eines stirnseitigen Schaltringes verschaltet sind, ausgebildet sein. Der Rotor kann beispielsweise als Rotorblechpaket mit darin versenkten Permanentmagneten zur Magnetisierung des Rotors ausgebildet sein. Durch gesteuerte Bestromung der Zahnspulenwicklung wird durch elektromagnetische Wechselwirkung über einen Luftspalt zwischen Stator und Rotor der Rotor in Drehbewegung um die Rotorachse versetzt. Die elektrische Maschine umfasst einen im Gehäuse von wenigstens einer Lufteintrittsöffnung des Gehäuses bis zu wenigstens einer Luftaustrittsöffnung des Gehäuses verlaufenden Kühlweg, in dem Kühlluft zur Abfuhr von Verlustwärme der Aktivanordnung geführt ist.

Im Gegensatz zu einem Rotor mit einem direkt auf der Rotorwelle sitzenden Rotorblechpaket umfasst die erfindungsgemäße elektrische Maschine einen den Rotor tragenden Rotorträger, der drehfest auf einer im Gehäuse drehbar gelagerten und um die Rotorachse rotierbaren Rotorwelle sitzt. Dabei kann der Rotorträger als separates Bauteil ausgebildet und auf die Rotorwelle aufgeschrumpft sein; ebenso können Rotorträger und Rotorwelle auch einstückig als ein Bauteil ausgebildet sein, beispielsweise als Gussteil. Die Rotorwelle ist im Gehäuse typischerweise an einer A-Seite, an der sie beispielsweise über ein nicht dargestelltes Gleichlaufgelenk zur Übertragung eines Drehmoments mit einem Rad oder einem Radsatz eines Fahrzeugs kuppelbar ist, und an einer der A-Seite axial gegenüber liegenden B-Seite gelagert, an der sie mit einer Nabe zur Übertragung eines Drehmomentes von beispielsweise einer Bremsscheibe des Fahrzeugs drehfest verbunden ist. Zur Abführung der im Betrieb der Aktivanordnung entstehenden Wärme weist der Rotorträger einen bezüglich der Rotorachse rotationssymmetrischen, ringspaltförmigen Kühlkanal auf, der Teil des Kühlweges ist. Die lichte Weite des den Kühlkanal bildenden Ringspaltes, also die Differenz zwischen Außen- und Innendurchmesser einer senkrecht zur Strömungsrichtung stehenden Querschnittsfläche des Ringspaltes, kann dabei von einem A-seitigen Anfang des Kühlkanals bis zu einem B-seitigen Ende des Kühlkanals abnehmen, wobei die Abnahme kontinuierlich oder durchsetzt mit abschnittsweise konstanter lichter Weite erfolgen kann. Der Kühlkanal setzt sich aus einem im Bereich des Rotors zylinderförmigen Kanalabschnitt und einem anschließenden, trichterförmig nach außen laufenden Kanalabschnitt zusammen. Die Form des trichterförmig nach außen laufenden Kanalabschnitts kann durch die Fläche beschrieben werden, die ein Kurvenabschnitt durch Rotation um die Rotorachse erzeugt, wobei als Kurvenabschnitt beispielsweise ein Abschnitt eines Kreisbogens, einer Ellipse, einer Hyperbel, einer Parabel, oder dergleichen zur Anwendung kommen kann. Im zylindrischen Kanalabschnitt nimmt der Kühlluftstrom vom Rotor radial nach innen abgegebene Wärme auf. Im anschließenden trichterförmigen Kanalabschnitt nimmt der Kühlluftstrom dann von Stator und Rotor axial in Richtung B-Seite abgegebene Wärme auf. Der im Rotorträger integrierte Kühlkanal ermöglicht eine effektive Abfuhr von durch die Aktivanordnung abgegebene Wärme. Dabei kommt die erfindungsgemäße Kühlung ohne einen innerhalb der Kapselung geführten Innenkühlkreis aus, was insgesamt eine kompakte Bauform der elektrischen Maschine ermöglicht.

In einer vorteilhaften Ausführungsform der erfindungsgemäßen elektrischen Maschine weist der Rotorträger eine Mehrzahl an im Kühlkanal angeordneten Lüfterstegen auf, die jeweils parallel zur Rotorachse ausgerichtet und um diese, vorzugsweise ungleichmäßig, verteilt angeordnet sind. Die Lüfterstege liegen vorzugsweise in von der Rotorachse ausgehenden Halbebenen und teilen den Kühlkanal in Ringspaltsegmente. Darin befindliche Kühlluft wird durch die mit dem Rotorträger rotierenden Lüfterstege um die Rotorachse in Drehung versetzt und im trichterförmigen Kanalabschnitt radial nach außen beschleunigt. Dadurch wird Kühlluft mit einer Strömungsrichtung vom A-seitigen Eingang zum B-seitigen Ausgang des Kühlkanals gefördert. Indem die Lüfterstege in unregelmäßigen Abständen um die Rotorachse angeordnet sind, wird die Periodizität das Lüftergeräusches unterbrochen, was zu einer aeroakustischen Optimierung der elektrischen Maschine beiträgt.

In einer weiteren vorteilhaften Ausführungsform der erfindungsgemäßen elektrischen Maschine erstreckt sich jeder der Lüfterstege axial wenigstens über den zylinderförmigen Kanalabschnitt und ragt vorzugsweise in den trichterförmigen Kanalabschnitt hinein. Die Aufteilung des Kühlkanals in durch die Lüfterstege abgeteilte Ringspaltsegmente wird hierdurch erst im trichterförmigen Kanalabschnitt bei geringer lichter Weite aufgehoben, so dass sich das Kühlluft aus den Ringspaltsegmenten vor dem Austritt aus dem Kühlkanal zu einem gleichmäßig durchmischten Kühlluftstrom vereinigen kann. Die derart im Kühlkanal angeordneten Lüfterstege bilden in vorteilhafter Weise eine Tragstruktur und gleichzeitig die Schaufeln eines Radiallüfters, die sich bis in den Bereich des sich trichterförmig erweiternden Kanalabschnitts erstrecken.

In einer weiteren vorteilhaften Ausführungsform der erfindungsgemäßen elektrischen Maschine weist jeder der Lüfterstege eine abgerundete Anströmkante mit einer Reihe von konkaven Ausnehmungen auf. Die A-seitigen Vorderkanten der Lüfterstege bilden die Anströmkanten für den angesaugten Kühlluftstrom. Die Abrundung einer Anströmkante vermindert deren Vorderkantengeräusche; zur weiteren aeroakustischen Optimierung der elektrischen Maschine können die abgerundeten Anströmkanten wellig, also mit einer Reihe von konkaven Ausnehmungen gestaltet sein. Zusätzlich können auch die im Kühlluftstrom stromab liegenden Hinterkanten der Lüfterstege derart ausgestaltet sein.

In einer weiteren vorteilhaften Ausführungsform der erfindungsgemäßen elektrischen Maschine weist der Rotorträger eine den Kühlkanal radial nach außen begrenzende Außenschale, auf welcher der diese umgebende Rotor aufliegt, und eine den Kühlkanal radial nach innen begrenzende Innenschale auf, die mit der Rotorwelle drehfest verbunden ist, wobei die Außenschale und die Innenschale durch die Lüfterstege verbunden sind. Durch diese Konstruktion lässt sich der Rotorträger mit integriertem Kühlkanal als Gussteil einstückig herstellen.

In einer weiteren vorteilhaften Ausführungsform der erfindungsgemäßen elektrischen Maschine weist das Gehäuse einen zylinderförmigen Gehäusemantel auf, der auf seiner einen Seite durch einen ringförmigen Gehäuseboden und auf seiner anderen Seite durch einen Lagerschild verschlossen ist. Der Gehäuseboden kann auf der A-Seite, der Lagerschild auf der B-Seite des Gehäusemantels liegen. Gehäusemantel und Gehäuseboden können einstückig ausgestaltet sein. Der Gehäuseboden weist mehrere Lufteintrittsöffnungen in den Kühlweg auf, durch welche die mit dem Rotorträger rotierenden Lüfterstege Kühlluft aus der Umgebung der elektrischen Maschine in den Kühlkanal saugen. Die Lufteintrittsöffnungen können über einen sich ringförmig um die Rotorachse erstreckenden Lufteinlassbereich des Gehäusebodens verteilt angeordnet sein. Der ringförmige Lufteinlassbereich kann sich radial vorzugsweise im Bereich des Rotors erstrecken, so dass durch die Lufteintrittsöffnungen einströmende Kühlluft wenigstens teilweise den der A-Seite zugewandten Stirnbereich des Rotors anströmt und Verlustwärme von dort abtransportiert. Jede Lufteintrittsöffnung kann durch einen kurzen Einlasskanal im Gehäuseboden gebildet sein, der sich von außen nach innen unter einem spitzen Winkel zur Rotorachse neigt, so dass die durchfließende Kühlluft in dieser Richtung in einen auf der Innenseite des Gehäusebodens gebildeten ringförmigen Vorraum, der Teil des Kühlwegs ist, strömt. Der Vorraum geht auf Höhe des A-seitigen Endes des Rotors in den Kühlkanal über. Der Gehäusemantel weist mehrere Luftaustrittsöffnungen aus dem Kühlweg auf, durch welche die mit dem Rotorträger rotierenden Lüfterstege Kühlluft aus axial im Bereich des Stators verlaufenden Einzelkanälen des Kühlwegs, in welche der trichterförmige Kanalabschnitt mündet, in die Umgebung ausstoßen. Die durch die Einzelkanäle strömende Kühlluft nimmt vom Stator über einen diesen umspannenden Statorrahmen, auch Statorjoch genannt, radial nach außen abgegebene Wärme auf und transportiert diese ab.

In einer weiteren vorteilhaften Ausführungsform der erfindungsgemäßen elektrischen Maschine sind die Lufteintrittsöffnungen um die Rotorachse ungleichmäßig verteilt im Gehäuseboden angeordnet und weisen wenigstens zwei unterschiedlich große Lufteintrittsquerschnitte auf. Durch die ungleichmäßige Verteilung der Lufteintrittsöffnungen sowie durch deren unterschiedlich große und/oder unterschiedlich geformte Einlasskanalquerschnitte kann eine weitere strömungsakustische Optimierung der elektrischen Maschine erreicht werden. Die Querschnitte der Einlasskanäle können beispielsweise rechteck- oder trapezförmig ausgebildet sein. Die Randkanten der Einlasskanäle können gerundet sein.

In einer weiteren vorteilhaften Ausführungsform der erfindungsgemäßen elektrischen Maschine sind die Einzelkanäle durch den Gehäusemantel und durch einen zylindrischen, den Stator umspannenden Statorrahmen begrenzt. So können auf der Innenseite des Gehäusemantels axial ausgerichtete Nuten eingeformt sein, deren offene Seiten durch den eingeschobenen Statorrahmen abgedeckt werden. Jeder Einzelkanal kann einen flachen, rechteckförmigen Strömungsquerschnitt aufweisen, dessen Höhe in radialer Richtung geringer ist als dessen Breite. Zwei benachbarte Einzelkanäle sind nur durch schmale Rippen an der Innenseite des Gehäusemantels voneinander getrennt, so dass über den Umfang des Gehäusemantels eine Vielzahl an Einzelkanälen angeordnet werden können. Hierdurch kann die von der Kühlluft transportierte Wärme nicht nur effektiv über eine Vielzahl an Luftaustrittsöffnungen mit der Kühlluft selbst abgeführt, sondern auch über Wärmeleitung an den Gehäusemantel und dann weiter an die Umgebung abgegeben werden. Gleichzeitig ist der Stator über die Rippen fest mit dem Gehäusemantel verbunden, um Kräfte und Momente übertragen zu können.

In einer weiteren vorteilhaften Ausführungsform der erfindungsgemäßen elektrischen Maschine ist am Statorrahmen wenigstens eine radial nach außen abstehende Kühlrippe angeformt, die in einen der Einzelkanäle hineinragt und sich axial über wenigstens einen Teil seiner Länge erstreckt. Vorzugsweise sind so viele Kühlrippen wie Einzelkanäle angeformt, so dass sich in jedem Einzelkanal eine Kühlrippe erstreckt. Die Kühlrippen verbessern den Wärmeübergang vom Statorrahmen auf die durch die Einzelkanäle strömende Kühlluft, um so die Wärmeabfuhr aus dem Stator zu verbessern.

In einer weiteren vorteilhaften Ausführungsform der erfindungsgemäßen elektrischen Maschine weist der Lagerschild einen ringförmigen Umlenkkanal zur Umlenkung der Strömungsrichtung der Kühlluft auf, welche durch den Rotorträger radial nach außen gerichtet in den Umlenkkanal einströmt und durch eine gerundete Außenwand des Umlenkkanals abgelenkt aus diesem axial gerichtet ausströmt. Der Umlenkkanal bildet den Übergang vom trichterförmigen Kanalabschnitt des Kühlkanals in die Einzelkanäle, wobei eine Umlenkung der Kühlluftströmung um 90° stattfindet. Bezüglich der Rotorachse weist ein Übergangsquerschnitt vom trichterförmigen Kanalabschnitt in den Umlenkkanal die Form eines schmalen Zylindermantels auf, während derjenige vom Übergangskanal in die Einzelkanäle - abgesehen von einigen Stützstegen - die Form eines schmalen Kreisringes hat. Durch Rundung der um die Rotorachse umlaufenden Außenwand des Umlenkkanals werden Strömungsverluste beim Umlenken der Kühlluftströmung vermindert.

In einer weiteren vorteilhaften Ausführungsform der erfindungsgemäßen elektrischen Maschine weist der Rotorträger Lüfterschaufeln zur Umwälzung von in einem gekapselten, die Aktivanordnung aufnehmenden Gehäusebereich befindlicher Luft auf. Die Lüfterschaufeln können an einer Außenseite der Außenschale des Rotorträgers im Bereich des Stators angeformt und radial ausgerichtet sein. Durch die Drehbewegung des Rotorträgers wälzen die Lüfterschaufeln Luft in einem gekapselten Gehäusebereich um, in dem sich die Aktivanordnung befindet. Durch die Luftumwälzung der als Quirl wirkenden Lüfterschaufeln wird die Kühlwirkung des Rotorträgers weiter erhöht.

Der Erfindung liegt ferner die Aufgabe zugrunde, ein Fahrzeug der eingangs genannte Art bereitzustellen, die einen Motor zum Antreiben eines Rades oder einer Radsatzwelle des Fahrzeugs mit kompakter Bauform bei effektiver Kühlung aufweist.

Diese Aufgabe wird nach der Erfindung gelöst durch ein gattungsgemäßes Fahrzeug, insbesondere spurgeführtes Personentransportfahrzeug, welches wenigstens einen Motor zum Antreiben eines Rades oder einer Radsatzwelle umfasst, wobei der Motor durch eine elektrische Maschine nach einem der Ansprüche 1 bis 11 gebildet ist. Das spurgeführte Personentransportfahrzeug kann gummibereifte Räder aufweisen und als sogenannter Peoplemover in Flughäfen oder als Stadtschnellbahn eingesetzt sein. Durch Integration einer erfindungsgemäßen elektrischen Maschine, die beispielsweise als Permanentmagneterregte Synchronmaschine ausgebildet sein kann, steht ein Motor zum Antreiben der Räder zur Verfügung, der bei effektiver Abfuhr der Verlustleistung im Fahrwerksbereich nur wenig Bauraum beansprucht.

In einer vorteilhaften Ausführungsform umfasst das erfindungsgemäße Fahrzeug einen Rahmenträger mit einer einen zylinderförmigen Motoraufnahmeraum bildenden Trägerschale, in welcher der Motor unter Bildung eines ringförmigen Luftspaltes zwischen seinem Gehäuse und der Trägerschale angeordnet ist. Dabei ist eine den Luftspalt axial unterteilende Trennwand derart angeordnet, dass durch die Luftaustrittsöffnungen ausströmende Kühlluft axial in den Luftspalt gelenkt wird und diesen nach Überströmung des Gehäusemantels auf dessen anderer Seite verlässt. Die Trennwand kann beispielsweise nahe der Luftaustrittsöffnungen angeordnet sein, genauer gesagt auf der A-Seite des Gehäusemantels. Dadurch wird verhindert, dass durch die Luftaustrittsöffnungen austretende Kühlluft durch den Luftspalt in Richtung Lufteintrittsöffnungen strömt, was zu einer unerwünschten Temperaturerhöhung der durch die Lufteintrittsöffnungen eingesaugten Kühlluft führen würde. Stattdessen lenkt die Trennwand die aus den Luftaustrittsöffnungen ausströmende Kühlluft in axialer Richtung durch den Luftspalt, wo sie an der B-Seite des Gehäusemantels in die Umgebung entweicht. Dabei kann die Kühlluft noch vom Gehäusemantel radial nach außen abgegebene Wärme abtransportieren.

Weitere Eigenschaften und Vorteile der Erfindung ergeben sich aus nachfolgender Beschreibung anhand von Zeichnungen, in deren
- FIG 1: eine erfindungsgemäße elektrische Maschine im Längsschnitt,
- FIG 2: den Längsschnitt eines Rotorträgers der elektrischen Maschine aus FIG 1 in perspektivischer Darstellung,
- FIG 3: den Längsschnitt eines Gehäuses ohne Lagerschild der elektrischen Maschine aus FIG 1 in perspektivischer Darstellung,
- FIG 4: den Lagerschild des Gehäuses der elektrischen Maschine aus FIG 1 in perspektivischer Darstellung und
- FIG 5: einen Teilschnitt der in einem Rahmenträger eines erfindungsgemäßen Fahrzeugs eingebauten elektrischen Maschine aus FIG 1
schematisch veranschaulicht sind.

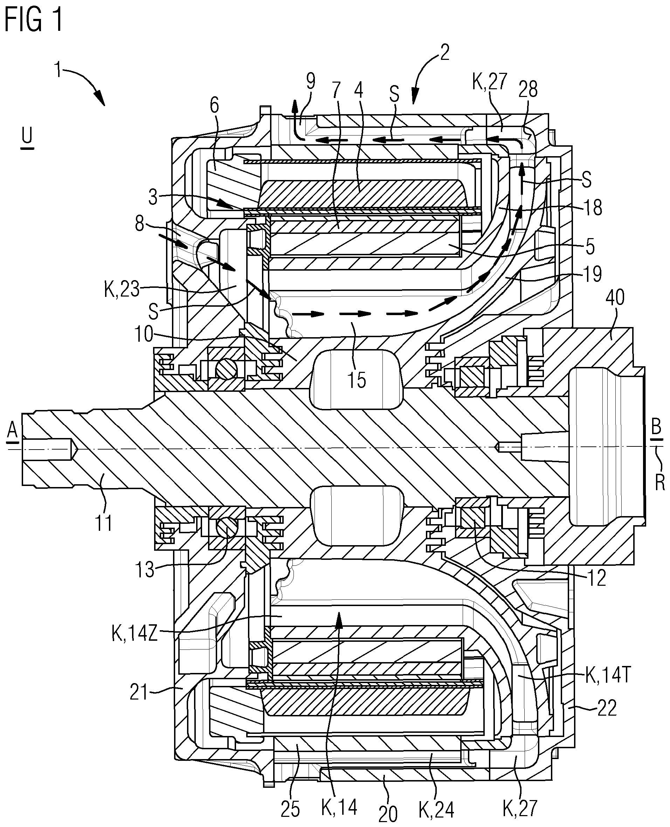

Gemäß FIG 1 umfasst eine erfindungsgemäße elektrische Maschine 1 eine in einem Gehäuse 2 angeordnete und gegenüber einer Umgebung U der Maschine 1 gekapselte Aktivanordnung 3. Die Aktivanordnung 3 weist einen Stator 4 und einen um eine Rotorachse R relativ zum Stator 4 drehbaren Rotor 5 auf. Die elektrische Maschine 1 kann beispielsweise als permanentmagneterregte Synchronmaschine ausgebildet sein. Der Stator 4 kann ein Statorblechpaket mit eingelegter Zahnspulenwicklung aufweisen, deren kurze Wickelköpfe mittels eines stirnseitigen Schaltringes 6 verschaltet sind. Der Rotor 5 kann ein Rotorblechpaket mit darin versenkten Permanentmagneten 7 zur Magnetisierung des Rotors 5 aufweisen. Durch gesteuerte Bestromung der Zahnspulenwicklung wird mittels elektromagnetische Wechselwirkung über einen Luftspalt zwischen Stator 4 und Rotor 5 der Rotor 5 in Drehbewegung um die Rotorachse R versetzt. Innerhalb des Gehäuses 2 führt ein Kühlweg K durch die elektrische Maschine 1, in dem Kühlluft zur Abfuhr von Verlustwärme der Aktivanordnung 3 geführt ist und der sich von Lufteintrittsöffnungen 8 des Gehäuses 2 bis zu Luftaustrittsöffnung 9 des Gehäuses 2 erstreckt. Die Strömungsrichtung S der Kühlluft ist entlang des Kühlwegs K durch Pfeile veranschaulicht. Die Kapselung der Aktivanordnung 3 schützt diese vor Schmutz und Feuchtigkeit, die durch die Kühlluft aus der Umgebung der elektrischen Maschine 1 eingetragen werden kann.

Die elektrische Maschine 1 umfasst einen den Rotor 5 tragenden Rotorträger 10, der drehfest auf einer im Gehäuse 2 drehbar gelagerten und um die Rotorachse R rotierbaren Rotorwelle 11 sitzt. Die Rotorwelle 11 ist im Gehäuse 2 typischerweise an einer A-Seite A, an der die Rotorwelle 11 beispielsweise über ein nicht dargestelltes Gleichlaufgelenk zur Übertragung eines Drehmoments mit einem nicht dargestellten Rad oder einem Radsatz eines Fahrzeugs kuppelbar ist, und an einer der A-Seite A axial gegenüber liegenden B-Seite B gelagert, an der die Rotorwelle 11 mit einer Nabe 40 zur Übertragung eines Drehmomentes von beispielsweise einer nicht dargestellten Bremsscheibe des Fahrzeugs drehfest verbunden ist. So kann A-seitig ein Zylinderlager 12 und B-seitig ein Kugellager 13 vorgesehen sein.

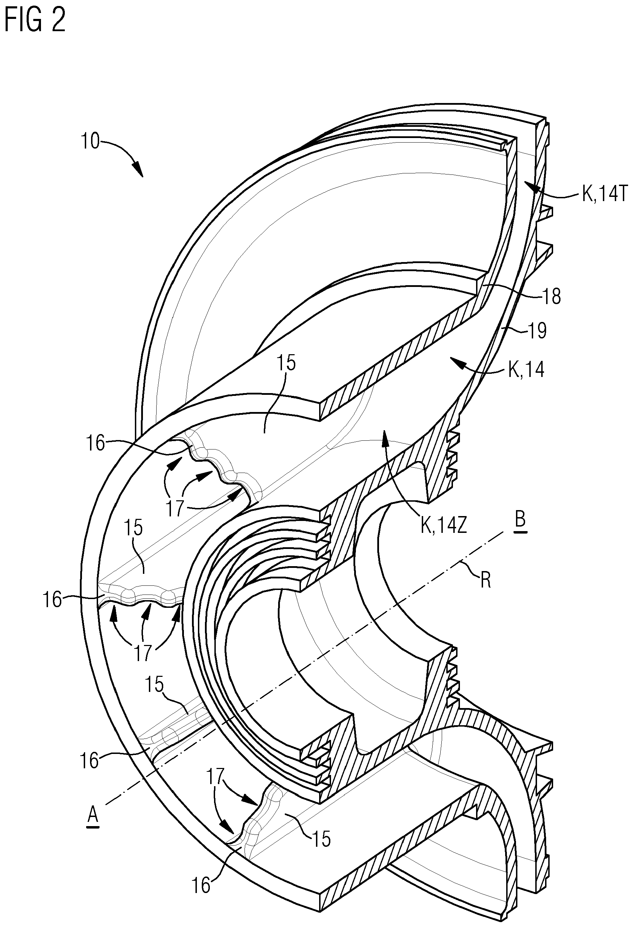

Als Teil des Kühlweges K weist der Rotorträger 10 gemäß FIG 1 und FIG 2 einen bezüglich der Rotorachse R rotationssymmetrischen, ringspaltförmigen Kühlkanal 14 auf. Die lichte Weite des den Kühlkanal 14 bildenden Ringspaltes, also die Differenz zwischen Außen- und Innendurchmesser einer senkrecht zur Strömungsrichtung S stehenden Querschnittsfläche des Ringspaltes, kann dabei von einem A-seitigen Anfang des Kühlkanals 14 bis zu einem B-seitigen Ende des Kühlkanals 14 abnehmen. Die Abnahme der lichten Weite kann dabei kontinuierlich oder durchsetzt mit abschnittsweise konstanten Abschnitten erfolgen. Der Kühlkanal 14 setzt sich aus einem im Bereich des Rotors 5 zylinderförmigen Kanalabschnitt 14Z und einem anschließenden, trichterförmig nach außen laufenden Kanalabschnitt 14T zusammen.

Die Form des trichterförmig nach außen laufenden Kanalabschnitts 14T kann durch eine Fläche beschrieben werden, die ein Kurvenabschnitt durch Rotation um die Rotorachse R erzeugt, wobei als Kurvenabschnitt beispielsweise ein Abschnitt eines Kreisbogens, einer Ellipse, einer Hyperbel, einer Parabel, oder dergleichen zur Anwendung kommen kann. Im zylindrischen Kanalabschnitt 14T nimmt der Kühlluftstrom vom Rotor 5 radial nach innen abgegebene Wärme auf. Im anschließenden trichterförmigen Kanalabschnitt 14T nimmt der Kühlluftstrom dann von Stator 4 und Rotor 5 axial in Richtung B-Seite abgegebene Wärme auf. Der im Rotorträger 10 integrierte Kühlkanal 14 ermöglicht eine effektive Abfuhr von durch die Aktivanordnung 3 abgegebene Wärme.

Der Rotorträger 10 weist gemäß FIG 1 und FIG 2 eine Mehrzahl an im Kühlkanal 14 angeordneten Lüfterstegen 15 auf, die jeweils parallel zur Rotorachse R ausgerichtet und um diese entweder gleichmäßig oder vorzugsweise ungleichmäßig verteilt angeordnet sind. Die Lüfterstege 15 liegen in von der Rotorachse R ausgehenden Halbebenen und teilen den Kühlkanal 14 in Umfangsrichtung in Ringspaltsegmente. Darin befindliche Kühlluft wird durch die mit dem Rotorträger 10 rotierenden Lüfterstege 15 um die Rotorachse R in Drehung versetzt und im trichterförmigen Kanalabschnitt 14T radial nach außen beschleunigt. Dadurch wird Kühlluft mit einer Strömungsrichtung S vom A-seitigen Eingang zum B-seitigen Ausgang des Kühlkanals 14 gefördert. Indem die Lüfterstege 15 in unregelmäßigen Abständen um die Rotorachse R angeordnet sind, wird die Periodizität das Lüftergeräusches unterbrochen, was zu einer aeroakustischen Optimierung der elektrischen Maschine 1 beiträgt.

Gemäß FIG 1 und FIG 2 erstreckt sich jeder der Lüfterstege 15 axial über den zylinderförmigen Kanalabschnitt 14Z und ragt in den trichterförmigen Kanalabschnitt 14T hinein. Die Aufteilung des Kühlkanals 14 in durch die Lüfterstege 15 abgeteilte Ringspaltsegmente wird hierdurch erst im trichterförmigen Kanalabschnitt 14T bei geringer lichter Weite aufgehoben, so dass sich die Kühlluft aus den Ringspaltsegmenten vor dem Austritt aus dem Kühlkanal 14 zu einem gleichmäßig durchmischten Kühlluftstrom vereinigen kann. Die derart im Kühlkanal 14 angeordneten Lüfterstege 15 bilden in vorteilhafter Weise eine Tragstruktur und gleichzeitig die Schaufeln eines Radiallüfters, die sich bis in den Bereich des sich trichterförmig erweiternden Kanalabschnitts 14T erstrecken. Jeder der Lüfterstege 15 weist eine abgerundete Anströmkante 16 mit einer Reihe von konkaven Ausnehmungen 17 auf. Die A-seitigen Vorderkanten der Lüfterstege 15 bilden die Anströmkanten 16 für den angesaugten Kühlluftstrom. Die Abrundung einer Anströmkante 16 vermindert deren Vorderkantengeräusche; zur weiteren aeroakustischen Optimierung der elektrischen Maschine 1 können die abgerundeten Anströmkanten 16 wellig, also mit einer Reihe von konkaven Ausnehmungen 17 gestaltet sein.

Gemäß FIG 1 und FIG 2 weist der Rotorträger 10 eine den Kühlkanal 14 radial nach außen begrenzende Außenschale 18, auf welcher der diese umgebende Rotor 5 aufliegt, und eine den Kühlkanal 14 radial nach innen begrenzende Innenschale 19 auf, die mit der Rotorwelle 11 drehfest verbunden ist. Die Außenschale 18 und die Innenschale 19 sind durch die Lüfterstege 15 verbunden. Durch diese Konstruktion lässt sich der Rotorträger 10 mit integriertem Kühlkanal 14 als Gussteil einstückig herstellen.

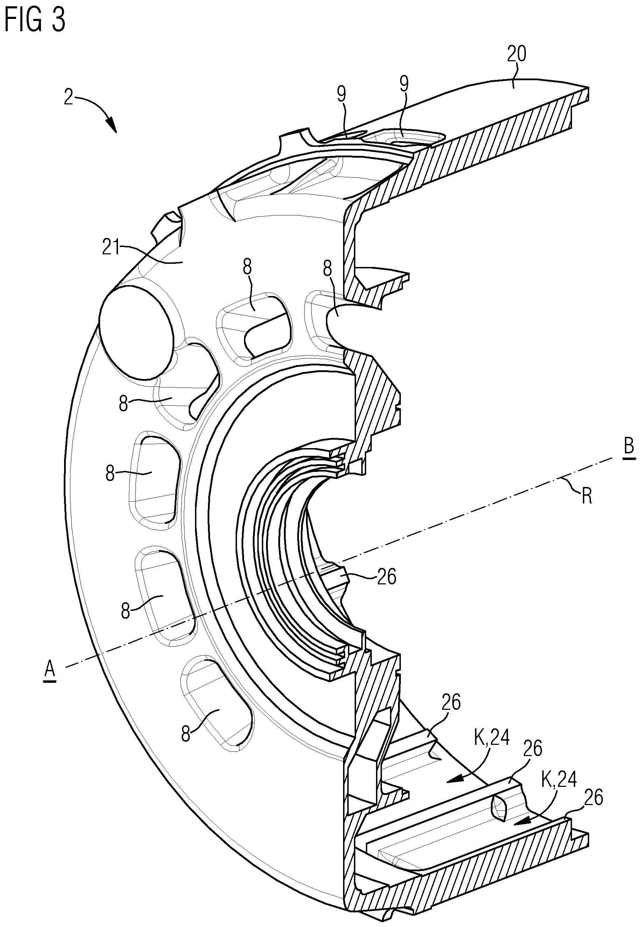

Gemäß FIG 1 und FIG 3 weist das Gehäuse 2 der elektrischen Maschine 1 einen zylinderförmigen Gehäusemantel 20 auf, der auf der A-Seite A in einen ringförmigen Gehäuseboden 21 übergeht und auf der B-Seite B durch einen Lagerschild 22 verschlossen ist. Gehäusemantel 20 und Gehäuseboden 21 sind also einstückig ausgestaltet. Im Gehäuseboden 21 sind mehrere Lufteintrittsöffnungen 8 in den Kühlweg K angeordnet, durch welche die mit dem Rotorträger 10 rotierenden Lüfterstege 15 Kühlluft aus der Umgebung U in den Kühlkanal 14 saugen. Die Lufteintrittsöffnungen 8 sind über einen sich ringförmig um die Rotorachse R erstreckenden Lufteinlassbereich des Gehäusebodens 21 verteilt. Der ringförmige Lufteinlassbereich erstreckt sich dabei radial im Bereich des Rotors 5, so dass durch die Lufteintrittsöffnungen 8 einströmende Kühlluft wenigstens teilweise den der A-Seite A zugewandten Stirnbereich des Rotors 5 anströmt und Verlustwärme von dort abtransportiert. Jede Lufteintrittsöffnung 8 kann durch einen kurzen Einlasskanal im Gehäuseboden 21 gebildet sein, der sich von außen nach innen unter einem spitzen Winkel zur Rotorachse R neigt, so dass die durchfließende Kühlluft in dieser Richtung S in einen auf der Innenseite des Gehäusebodens 21 gebildeten ringförmigen Vorraum 23, der Teil des Kühlwegs K ist, strömt. Der Vorraum 23 geht auf Höhe des A-seitigen Endes des Rotors 5 in den Kühlkanal 14 über. Im Gehäusemantel 20 sind mehrere Luftaustrittsöffnungen 9 aus dem Kühlweg K angeordnet, durch welche die mit dem Rotorträger 10 rotierenden Lüfterstege 15 Kühlluft aus axial im Bereich des Stators 4 verlaufenden Einzelkanälen 24 des Kühlwegs K, in welche der trichterförmige Kanalabschnitt 14T mündet, in die Umgebung U ausstoßen. Die durch die Einzelkanäle 24 strömende Kühlluft nimmt vom Stator 4 über einen diesen umspannenden Statorrahmen 25, auch Statorjoch genannt, radial nach außen abgegebene Wärme auf und transportiert diese ab.

Die Lufteintrittsöffnungen 8 sind gemäß FIG 3 ungleichmäßig um die Rotorachse R verteilt im Gehäuseboden 21 angeordnet und weisen nur teilweise gleich große Lufteintrittsquerschnitte auf. Durch die ungleichmäßige Verteilung der Lufteintrittsöffnungen 8 sowie durch deren unterschiedlich große und/oder unterschiedlich geformte Einlasskanalquerschnitte kann eine weitere strömungsakustische Optimierung der elektrischen Maschine 1 erreicht werden. Die Lufteinlassöffnungen bzw. Einlasskanäle weisen trapezförmig ausgebildete Querschnitte und gerundete Randkanten auf.

Gemäß FIG 3 sind die Einzelkanäle 24 durch den Gehäusemantel 20 und durch einen zylindrischen, den Stator 4 umspannenden Statorrahmen 25 begrenzt. Der Statorrahmen 25 bildet das so genannte Statorjoch. Auf der Innenseite des Gehäusemantels 20 eingeformte, axial ausgerichtete Nuten bilden die Einzelkanäle 24, deren offene Seiten gemäß FIG 1 durch den eingeschobenen Statorrahmen 25 abgedeckt werden. Jeder Einzelkanal 24 weist einen flachen, rechteckförmigen Strömungsquerschnitt auf, dessen Höhe in radialer Richtung geringer ist als dessen Breite. Zwei benachbarte Einzelkanäle 24 sind nur durch schmale Rippen 26 an der Innenseite des Gehäusemantels 20 voneinander getrennt, so dass über den Umfang des Gehäusemantels 20 eine Vielzahl an Einzelkanälen 24 angeordnet sind. Hierdurch kann die von der Kühlluft transportierte Wärme nicht nur effektiv über eine Vielzahl an Luftaustrittsöffnungen 9 mit der Kühlluft selbst abgeführt, sondern auch über Wärmeleitung an den Gehäusemantel 20 und dann weiter an die Umgebung U abgegeben werden. Zur weiteren Verbesserung der Wärmeabfuhr aus dem Stator 4 können an einer radialen Außenseite des Statorrahmens 25 radial nach außen abstehende Kühlrippen angeformt sein, die hier nicht dargestellt sind. Jede Kühlrippe ragt so in einen der Einzelkanäle 24 hinein und erstreckt sich axial über wenigstens einen Teil deren Längen. Die Kühlrippen verbessern den Wärmeübergang vom Statorrahmen 25 auf die durch die Einzelkanäle 24 strömende Kühlluft.

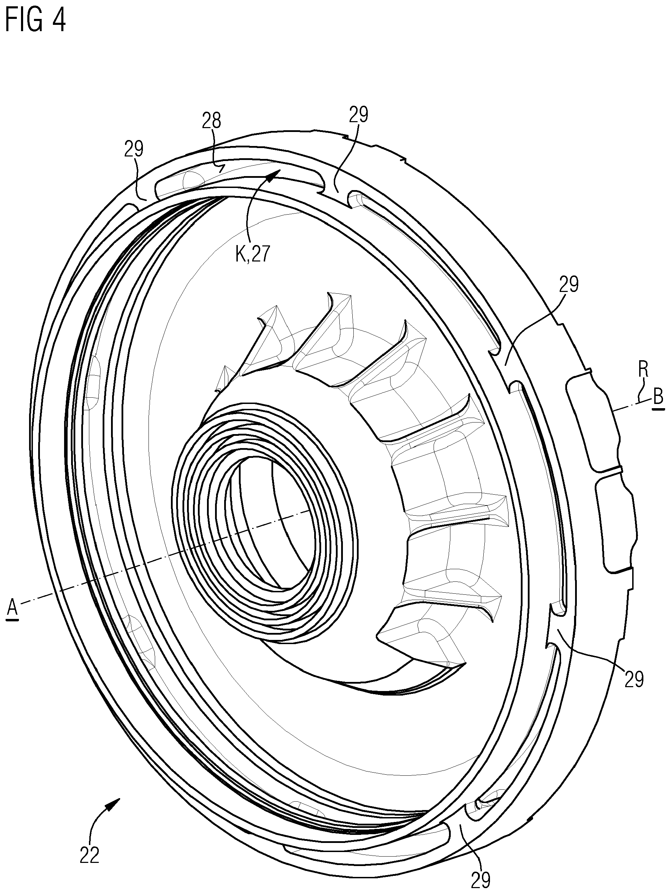

Gemäß FIG 1 und FIG 4 weist der Lagerschild 22 einen ringförmigen Umlenkkanal 27 zur Umlenkung der Strömungsrichtung S der Kühlluft auf, der ebenfalls Teil des Kühlweges K ist. Die Kühlluft strömt aus dem Rotorträger 10 radial nach außen gerichtet in den Umlenkkanal 27 ein, wird im Umlenkkanal 27 durch dessen gerundete Außenwand 28 abgelenkt, um aus diesem axial gerichtet auszuströmen. Der Umlenkkanal 27 bildet den Übergang vom trichterförmigen Kanalabschnitt 14T des Kühlkanals 14 in die Einzelkanäle 24, wobei eine Umlenkung der Kühlluftströmung um 90° stattfindet. Bezüglich der Rotorachse R weist ein Übergangsquerschnitt vom trichterförmigen Kanalabschnitt 14T in den Umlenkkanal 27 die Form eines schmalen Zylindermantels auf, während derjenige vom Übergangskanal 27 in die Einzelkanäle 24 - abgesehen von einigen Verbindungsstegen 29 - die Form eines schmalen Kreisringes hat. Durch Rundung der um die Rotorachse R umlaufenden Außenwand 28 des Umlenkkanals 27 werden Strömungsverluste beim Umlenken der Kühlluftströmung vermindert.

Vorzugsweise weist der Rotorträger 10 nicht dargestellte Lüfterschaufeln zur Umwälzung von in einem gekapselten, die Aktivanordnung 3 aufnehmenden Gehäusebereich befindlicher Luft auf. Die Lüfterschaufeln können an einer Außenseite der Außenschale 18 des Rotorträgers 10 im Bereich des Stators 4 angeformt und radial ausgerichtet sein. Durch die Drehbewegung des Rotorträgers 15 wälzen die Lüfterschaufeln Luft in einem gekapselten Gehäusebereich um, in dem sich die Aktivanordnung 3 befindet. Durch die Luftumwälzung der als Quirl wirkenden Lüfterschaufeln wird die Kühlwirkung des Rotorträgers 10 weiter erhöht.

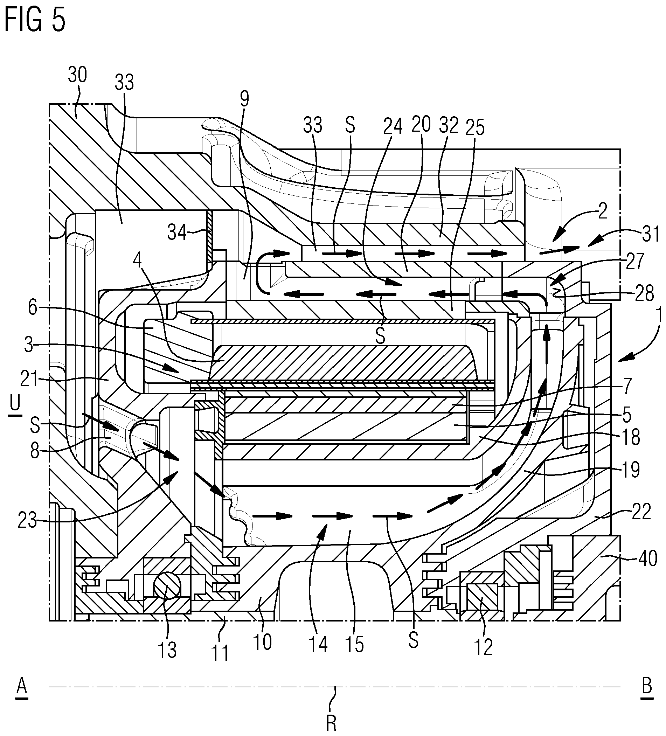

Eine erfindungsgemäße elektrische Maschine 1 wird in einem Fahrzeug, beispielsweise in einem spurgeführten Personentransportfahrzeug, als Motor zum Antreiben eines Rades oder einer Radsatzwelle eingesetzt. Das spurgeführte Personentransportfahrzeug kann gummibereifte Räder aufweisen und als sogenannter Peoplemover in Flughäfen oder als Stadtschnellbahn eingesetzt sein. Gemäß FIG 5 umfasst das nicht näher dargestellte Fahrzeug einen Rahmenträger 30, der Teil eines Fahrwerks des Fahrzeugs ist. Der Rahmenträger 30 umfasst eine einen zylinderförmigen Motoraufnahmeraum 31 bildende Trägerschale 32, in welcher der Motor unter Bildung eines ringförmigen Luftspaltes 33 zwischen seinem Gehäuse 2 und der Trägerschale 32 angeordnet ist. Dabei ist eine den Luftspalt 33 axial unterteilende Trennwand 34 derart angeordnet, dass durch die Luftaustrittsöffnungen 9 ausströmende Kühlluft axial in den Luftspalt 33 gelenkt wird und diesen nach Überströmung des Gehäusemantels 20 auf dessen B-Seite B verlässt. Die Trennwand 34 ist nahe der Luftaustrittsöffnungen 9 auf der A-Seite A angeordnet. Dadurch wird verhindert, dass durch die Luftaustrittsöffnungen 9 austretende Kühlluft durch den Luftspalt 33 in Richtung Lufteintrittsöffnungen 8 strömt, was zu einer unerwünschten Temperaturerhöhung der durch die Lufteintrittsöffnungen 8 eingesaugten Kühlluft führen würde. Stattdessen lenkt die Trennwand 34 die aus den Luftaustrittsöffnungen 9 ausströmende Kühlluft in axialer Richtung durch den Luftspalt 33, wo sie an der B-Seite B des Gehäusemantels 20 in die Umgebung U entweicht. Dabei kann die Kühlluft noch vom Gehäusemantel 20 radial nach außen abgegebene Wärme abtransportieren.

## Patentansprüche

1. Elektrische Maschine (1), insbesondere eine permanentmagneterregte Synchronmaschine, umfassend
- eine in einem Gehäuse (2) angeordnete und gegenüber einer Umgebung (U) der Maschine (1) gekapselte Aktivanordnung (3), welche einen Stator (4) und einen um eine Rotorachse (R) relativ zum Stator (4) drehbaren Rotor (5) aufweist, und
- einen im Gehäuse (2) von wenigstens einer Lufteintrittsöffnung (8) des Gehäuses (2) bis zu wenigstens einer Luftaustrittsöffnung (9) des Gehäuses (2) verlaufenden Kühlweg (K) zur Führung von Kühlluft,
**gekennzeichnet durch**,
- einen den Rotor (5) tragenden Rotorträger (10), der drehfest auf einer im Gehäuse (2) drehbar gelagerten und um die Rotorachse (R) rotierbaren Rotorwelle (11) sitzt,
- wobei der Kühlweg (K) einen im Rotorträger (10) verlaufenden, bezüglich der Rotorachse (R) rotationssymmetrischen, ringspaltförmigen Kühlkanal (14) mit einem im Bereich des Rotors (5) zylinderförmigen Kanalabschnitt (14Z) und einem anschließenden, trichterförmig nach außen laufenden Kanalabschnitt (14T) aufweist.

2. Elektrische Maschine (1) nach Anspruch 1,
- wobei der Rotorträger (10) eine Mehrzahl an im Kühlkanal (14) angeordneten Lüfterstegen (15) aufweist, die jeweils parallel zur Rotorachse (R) ausgerichtet und um diese, vorzugsweise ungleichmäßig, verteilt angeordnet sind.

3. Elektrische Maschine (1) nach Anspruch 2,
- wobei jeder der Lüfterstege (15) axial sich wenigstens über den zylinderförmigen Kanalabschnitt (14Z) erstreckt und vorzugsweise in den trichterförmigen Kanalabschnitt (14T) hineinragt.

4. Elektrische Maschine (1) nach Anspruch 2 oder 3,
- wobei jeder der Lüfterstege (15) eine abgerundete Anströmkante (16) mit einer Reihe von konkaven Ausnehmungen (17) aufweist.

5. Elektrische Maschine (1) nach einem der Ansprüche 2 bis 4,
- wobei der Rotorträger (10) eine den Kühlkanal (14) radial nach außen begrenzende Außenschale (18), auf welcher der diese umgebende Rotor (5) aufliegt, und eine den Kühlkanal (14) radial nach innen begrenzende Innenschale (19), die mit der Rotorwelle (11) drehfest verbunden ist, aufweist, und
- wobei die Außenschale (18) und die Innenschale (19) durch die Lüfterstege (15) verbunden sind.

6. Elektrische Maschine (1) nach einem der vorangehenden Ansprüche,
- wobei das Gehäuse (2) einen zylinderförmigen Gehäusemantel (20) aufweist, der auf seiner A-Seite (A) durch einen ringförmigen Gehäuseboden (21) und auf seiner gegenüberliegenden B-Seite (B) durch einen Lagerschild (22) verschlossen ist,
- wobei der Gehäuseboden (21) mehrere Lufteintrittsöffnungen (8) aufweist, durch welche die mit dem Rotorträger (10) rotierenden Lüfterstege (15) Kühlluft aus der Umgebung (U) in den Kühlkanal (14) saugen, und
- wobei der Gehäusemantel (20) mehrere Luftaustrittsöffnungen (9) aufweist, durch welche die mit dem Rotorträger (10) rotierenden Lüfterstege (15) Kühlluft aus axial im Bereich des Stators (4) verlaufenden Einzelkanälen (24) des Kühlwegs (K), in welche der trichterförmige Kanalabschnitt (14T) mündet, in die Umgebung (U) ausstoßen.

7. Elektrische Maschine (1) nach Anspruch 6,
- wobei die Lufteintrittsöffnungen (8) um die Rotorachse (R) ungleichmäßig verteilt im Gehäuseboden (21) angeordnet sind und wenigstens zwei unterschiedlich große Lufteintrittsquerschnitte aufweisen.

8. Elektrische Maschine (1) nach Anspruch 6 oder 7,
- wobei die Einzelkanäle (24) durch den Gehäusemantel (20) und durch einen zylindrischen, den Stator (4) umspannenden Statorrahmen (25) begrenzt sind.

9. Elektrische Maschine (1) nach Anspruch 8,
- wobei am Statorrahmen (25) wenigstens eine radial nach au-βen abstehende Kühlrippe angeformt ist, die in einen der Einzelkanäle (24) hineinragt und sich axial über wenigstens einen Teil seiner Länge erstreckt.

10. Elektrische Maschine (1) nach einem der Ansprüche 6 bis 9,
- wobei der Lagerschild (22) einen ringförmigen Umlenkkanal (27) des Kühlwegs (K) zur Umlenkung der Strömungsrichtung (S) der Kühlluft aufweist, welche durch den Rotorträger (10) radial nach außen gerichtet in den Umlenkkanal (27) einströmt und durch eine gerundete Außenwand (28) des Umlenkkanals (27) abgelenkt aus diesem axial gerichtet ausströmt.

11. Elektrische Maschine (1) nach einem der vorangehenden Ansprüche,
- wobei der Rotorträger (10) Lüfterschaufeln zur Umwälzung von in einem gekapselten, die Aktivanordnung (3) aufnehmenden Gehäusebereich befindlicher Luft aufweist.

12. Fahrzeug, insbesondere spurgeführtes Personentransportfahrzeug,
- welches wenigstens einen Motor zum Antreiben eines Rades oder einer Radsatzwelle umfasst,
- wobei der Motor durch eine elektrische Maschine (1) nach einem der vorangehenden Ansprüche gebildet ist.

13. Fahrzeug, nach Anspruch 12,
- welches einen Rahmenträger (30) mit einer einen zylinderförmigen Motoraufnahmeraum (31) bildenden Trägerschale (32) umfasst, in welcher der Motor unter Bildung eines ringförmigen Luftspaltes (33) zwischen seinem Gehäuse (2) und der Trägerschale (32) angeordnet ist,
- wobei eine den Luftspalt (33) axial unterteilende Trennwand (34) derart angeordnet ist, dass durch die Luftaustrittsöffnungen (9) ausströmende Kühlluft axial in den Luftspalt (33) gelenkt wird und diesen nach Überströmung des Gehäusemantels (20) auf dessen B-Seite (B) verlässt.
